Europäisches Patentamt

European Patent Office

Office européen des brevets

(11) Publication number: **0 156 375**
**B1**

## EUROPEAN PATENT SPECIFICATION

(45) Date of publication of patent specification: **13.06.90**

(21) Application number: **85103656.6**

(22) Date of filing: **27.03.85**

(51) Int. Cl.⁵: **G 01 S 13/32, H 04 L 7/04**

(54) Pulse synchronizing apparatus.

(30) Priority: **30.03.84 US 595090**

(43) Date of publication of application:
**02.10.85 Bulletin 85/40**

(45) Publication of the grant of the patent:
**13.06.90 Bulletin 90/24**

(84) Designated Contracting States:
**DE GB**

(56) References cited:
**EP-A-0 063 496**
**DE-A-2 133 497**
**US-A-3 447 155**
**US-A-3 597 547**
**US-A-3 774 206**
**US-A-4 053 888**

**NEC RESEARCH & DEVELOPMENT, vol. 298, no. 6, December 1963, pages 32-43, Tokyo, JP; T. SEKIMOTO et al.: "Group synchronization for digital transmission systems"**

(73) Proprietor: **HONEYWELL INC.**
**Honeywell Plaza**
**Minneapolis Minnesota 55408 (US)**

(72) Inventor: **Bjorke, Merlin D.**
**3626 Coolidge Street N.E.**
**Minneapolis Minnesota 55418 (US)**

(74) Representative: **Rentzsch, Heinz et al**
**Honeywell Europe S.A. Holding KG Patent- und Lizenzabteilung Kaiserleistrasse 55**
**D-6050 Offenbach am Main (DE)**

Courier Press, Leamington Spa, England.

## Description

This invention relates to radar distance measuring equipment, and particularly to apparatuses for synchronizing two pulse trains derived from a single clock signal. Pulsed radar systems have conventionally operated with a relatively low transmitter duty cycle determined by the maximum range to the target. As a result, the peak power required for the transmitter in order to obtain sufficient signal-to-noise ration is high.

The duty cycle can be increased by increasing the pulse repetition frequency. This results in having several pulses in flight at the same time. In these circumstances, an apparatus must be provided for overcoming the ambiguous range problem due to multiple pulses in flight. For non-coherent radars, this commonly takes the form of random pulse position frequency jitter, which is effective for relatively small duty cycle improvement but degrades rapidly with increase in duty cycle.

Increasing pulse repetition frequency and overcoming ambiguity may be accomplished by encoding an RF pulse train which in turn will permit increasing the altimeter pulse repetition frequency by at least a factor of ten. This in turn will yield a corresponding increase in system loop sensitivity. Previous pulsed altimeter concepts require that the system wait for the ground echo from a given transmitted pulse to be received back at the receiver before transmitting another pulse. Doing so prevented the possibility of false "lock-on". Suitable encoding of a transmitted pulse sequence, and the corresponding receiver correlation of that code sequence, will permit many pulses to be in route to the ground and back at the same time. This increases the potential total average RF energy on the target, and improves sensitivity (particularly at high altitudes, where the "wait time" would previously have been relatively long). The transmitter pulse separation in these circumstances is now limited only by "pulse spreading" on the ground within the antenna beamwidth, and the codes ambiguous range rejection capabilities.

DE—A—21 33 497 describes a radar distance measuring apparatus according to the preamble of claim 1. In this apparatus the received radar signal is compared in a correlator circuit with a reference signal corresponding to but delayed with respect to the transmitted signal, and the distance is determined by the amount of the delay which gives maximum correlation of the two signals. The transmitted signal is a periodically repeated sequence of binary pseudo-random square wave pulses and the reference signal is increasingly delayed by a given time interval during each successive period of the pulse sequence until maximum correlation is achieved. The number of periods needed to achieve maximum correlation is automatically counted and is indicated or otherwise used as a measure of the distance. Two pulse generators are provided for generating two identical sequences of binary pseudo-random pulses. Both pulse generators are driven by a common clock generator. The first pulse generator provides the modulation signal for the transmitter and the second pulse generator delivers an equal but delayed sequence of pulses to one onput of the correlator circuit, the other input of which receives a pulse sequence derived by demodulation from the signal reflected by the target and received by a receiver. A period counter is connected to a second output of the second pulse generator and an indicator or other utilizing device is connected to the period counter.

Heretofor, unresolved coding problem was not in generating the code but in the establishing of a simple method of variably delaying a complete code word in time (as opposed to a single pulse), relative to its origin, with virtually infinite resolution and over a wide range of delay times. In order to achieve this object the pulse synchronizing apparatus according to the invention utilizes a programmable delay means for generating a pulse train derived from a high frequency clock. The programmable delay means is responsive to a command siognal for monotonically advancing or retarding the pulse train relative to the high frequency clock in accordance with the command signal. Preferred embodiments and details are described in the subclaims.

When employed in a radar altimeter, a received pulse train, sometimes referred to as the video signal, is compared with a pulse train having substantially the same characteristic in code as the video signal but which is forceably delayed in time so as to be synchronized with the video signal. An output indicative of the comparator may be integrated so as to provide control of the programmable delay line to appropriately advance or retard the signal. When synchronization occurs, a stop pulse is provided to a timer such that the timer output is indicative of the range from the radar to the target. A preferred embodiment of the invention will be described with reference to the drawings, in which

FIGURE 1 is a block diagram of a pulse radar altimeter employing the principles of the invention;

FIGURE 2 is a schematic diagram showing certain relationships between returned video pulses and local gating pulses in predetermined conditions;

FIGURE 3 is a graphical representation showing certain relationships between individual video signals and gating pulses.

## Description of the Preferred Embodiment

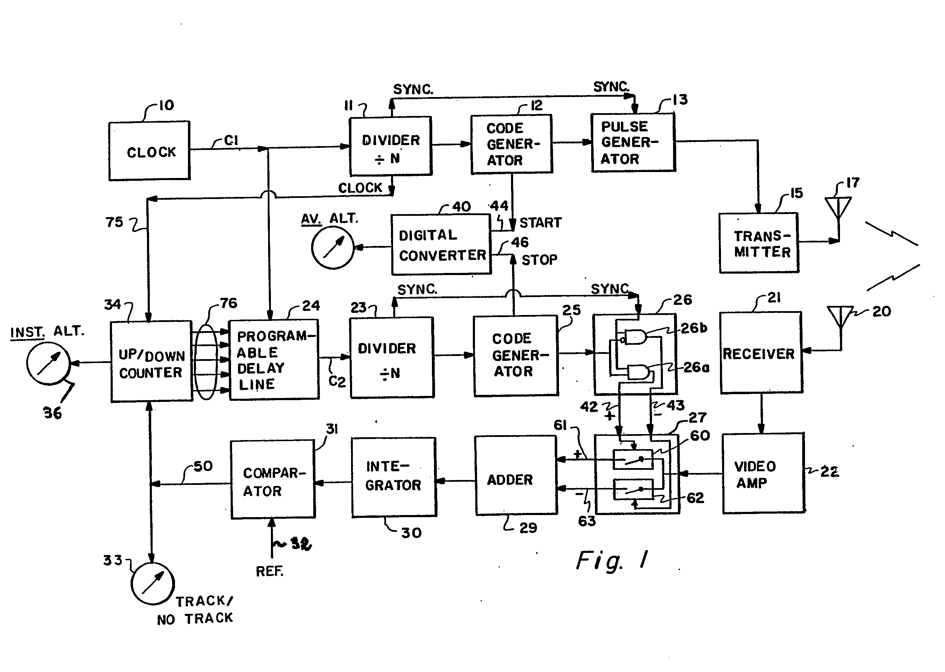

The synchronization apparatus of the present invention will be described as utilized in a radar altimeter to facilitate understanding. In the block diagram of FIGURE 1, a clock 10 supplies a continuous train of equally spaced pulses at a fixed pulse repetition frequency thereby establishing a first clock signal C1. In turn the first clock signal C1 is fed through a divider 11 which divides the first clock signal by an integer "N" thereby providing a first pulse train. A code generator 12 operates on the first pulse train to derive therefrom a second pulse train having a repetitive pulse code which in turn triggers a pulse generator 13. The output of pulse generator 13 is a sequence of sharp pulses, defined by the second pulse code of the second pulse train, applied to transmitter 15 for subsequent radar transmission through antenna 17. Each repetition of the pulse code defines a word in a well known manner.

In the radar altimeter illustrated in Figure 1, the output of transmitting antenna 17 is a repetitive radar pulse code which may be, by way of example, coherent or non-coherent radar pulses, and the like. The repeating pulse code is radiated from the transmitting antenna 17 and reflected from the ground, or other target, to a receiving antenna 20 and a receiver 21 which energizes a video amplifier 22 to provide a train of reflected pulses delayed in time relative to the output of pulse generator 13 by an interval which is a measure of the distance to the reflecting target. Antenna 17 and 20 may be a single antenna which is fed from a duplexer well known in the art.

The output pulses from the video amplifier 22 will be subsequently integrated by integrator 30 through adder 29 and gating circuit 27, both of which will subsequently be described. The output of the integrater 30 is presented to comparator 31 having an output which is presented as a command signal 50 to up/down counter 34. The output of comparator 31 is also presented to a search-and-track logic 33 which has an output presented to a track/non-track indicator.

As illustrated in Figure 1, first clock signal C1 is presented to a second divider 23 through a programmable delay line 24. The output of a programmable delay means 24 shown as a programmable delay line, is a second clock signal C2 which is substantially identical to first clock signal C1 but which is delayed with respect to the first clock signal. In turn the second clock signal C2 is passed through a second divider 23 which divides the second clock signal by the same factor "N" thereby providing a third pulse train. The third pulse train is passed through a second code generator 25 substantially identical to code generator 12 for providing a fourth pulse train having a repetitive code identical to the second pulse train at the output of code generator 12 but which is delayed in time.

Programmable delay line 24, as illustrated in Figure 1, produces a delay in accordance with a command signal 76 provided by the digital output lines of up/down/hold counter 34, hereafter counter 34. Counter 34 counts clock signals 75, dependent upon a decision control signal 50 as will be subsequently described.

The total delay provided between the second clock signal and the first clock signal should be between some fixed value, including zero, and a total change exactly the same length as clock signal passing through it — that is a sum of an integral number of successive or monotonic increments of delay should be equal to the period of clock signal C1. Counter 34 is usually clocked by clock signal 75 at a very much slower rate than a signal passing through the delay line, so that the delay through the delay means will only monotonically change one increment for each clock signal presented at input 75. The combination of programmable delay line 24 and counter 34 is such that when the maximum delay of the delay line is reached after successive step changes provided by counter 34, the delay automatically is switched to the other end of the delay line and the sequence continues over again in exactly the same fashion as the "roll-over" in an up/down counter when it overflows or underflows. The result is that for a continuous shift of the delay line in one direction, a complete cycle of incoming clock from clock 10 is skipped or added every time the phase delay line control counter "rolls-over".

In Figure 1, divider 11 may be a simple digital divider and includes output taps for having other division factors. Therefore clock signal 75 may be picked up off a tap of divider 11 as illustrated. Doing so synchronizes clock 75 with clock signal C1, although this may not be necessary.

The small increment phase shifting technique just described, functions similarly to that of a single-side band, suppress carrier modulator. The net result is that the average output frequency from the phase shifter is different from that of the master clock by the rate at which the shifter is driven through 360 degree clock shifts. This is the unique frequency controlling mechanism that effectively increases or decreases the average third pulse train frequency (in very small increments) presented to code generator 25 and in turn to gate generator 26 as will be further described.

Consider a situation where the first clock signal provided by clock 10 is chosen to have a period equal to the propagation time of 16 radar feet (approximately 31 MHz). This choice allows the phase shifting mechanism for the gate clock to be a 4-bit, digitally controlled device for one-foot shift increments. Other specific combinations of clock frequency and shift increments may be more convenient for some applications. A programmable delay line rather than a discreet component phase shifter or shift register is economically desireable.

In Figure 1 the command signal 76 to the programmable delay line is driven by a 4-bit up/down counter 34 that is clocked at a rate equal to the maximum search or track rate requirement of the altimeter. This is determined by clock signal 75. This follows because we chose one-foot increments for each shift. Other compatible combinations can be used depending upon requirements. For example, a 2000-cycle-per-second clock rate 75 will yield a 2000-foot-per-second gate shift rate capability. The "up/down/hold" decision signal 50 to the up/down/hold counter 34 comes from a high speed comparator 31 that compares the conventional gated and integrated "range error" signal from integrator 30 with that of a fixed reference voltage to close the track loop, as in conventional altimeters. The normal AGC and search-track functions are also mechanised as they are in conventional altimeters.

If the up/down counter is expanded to 16 bits, using the first 4 bits to drive the programmable delay line 24, a 16-bit digital altitude can be extracted directly from this counter for specific applications. Nevertheless, for ease and adjustment for "zero-foot" installation delays as required in most aircraft, average digital altitude output information is derived from a conventional time-to-digital converter 40 that gets its "start" pulse from code word generator 12 and its "stop" pulses from code word generator 25 indicated by outputs 44 and 46 respectively. The output of digital converter 40 is therefore indicative of the altitude. Of course, this is only the situation when the system is in a "track" condition.

Gate generator 26 is diagrammatically shown as a pair of AND gates 26a and 26b each having as a first input a short gate or SYNC pulse provided by divider chain 23. AND gate 26a has as a second input, the output of code generator 25. Therefore gate 26a provides pulses 42 only when the coded pulse train provides a logical "one" or positive signals applied thereto concurrently with a SYNC pulse. Similarly, AND gate 26b has as a second input the inverted output of code generator 25. Therefore gate 26b provides pulses 43 only when the coded pulse train provides a logical "zero" or negative signals.

Gating circuit 27 is diagrammatically shown as gated switch 60 controlled by the output of gate 26a indicated by numeral 42 for passing the output of video amplifier 22 therethrough on signal line 61. Circuit 27 further includes gated switch 62 controlled by the the output of gate 26b indicated by numeral 43 for passing the output of video amplifier 22 therethrough on signal line 63.

The combination of gate generator 26 and gating circuit 27 functions as follows. If the delay between the second and fourth pulse trains provided by generators 12 and 25 is exactly the same as the time required for each successive pulse to be transmitted, reflected from the ground, and received, so that the first return or video pulse of each repetitive code word is synchronized with a first gating pulse, then every video pulse in the word is synchronized with a gating pulse, and a maximum signal is supplied to the integrator 30 through conductor 63, the positive input to ADDER 29. In these circumstances the output of the integrator will be sufficiently near the reference signal input 32 provided to comparator 31. Accordingly, comparator 31 provides a high voltage signal 50 so as to prevent counter 34 from counting. In these circumstances the delay provided by the delay line 24 remains constant thereby maintaining the output pulse train from code generator 25 to be exactly in sync with the received pulses indicated by video amplifier 22.

However, if the delay is such that the first video pulse is synchronized with some gating pulse other than the first one, some of the other video pulses are not synchronized with any gating pulse, and the integrator (30) receives a smaller signal. The output 50 of comparator 31 indicates such a condition and allows counter 34 to begin counting and monotonically changing the digital signal output presented to programmable delay line 24 so as to further delay the pulse train provided by code generator 25 until synchronization is obtained as aforesaid.

Through the frequency controlling mechanism of the present invention, all of the gates provided by gate generator 26 move inbound or outbound relative to the video pulses derived from the received transmitter pulses by virtue of clock signal C2 being advanced or retarded. This has the effort of changing the "gate clock" frequency of the pulse train output of divider 23. As the "gate clock" frequency is increased, the gates will move inbound. As the frequency is decreased, the gates will move outbound. If the frequency is not shifted, the gates will remain stationary relative to the transmitted pulses provided by divider 11.

Note that if the code generator (12 and 25) is random, the number of pulses applied to gates 42 and 43 are within one of each other. Since ADDER 29 sums the positive and DC inverted VIDEO signals, the integrator 30 output due to noise components on the VIDEO signals for each word is near zero. Thus the integrator output is indicative of virtually only the contribution of video signals which match code pulses. This will be further described. This circuit combination provides highly suppressed interference and ground clutter and false signals.

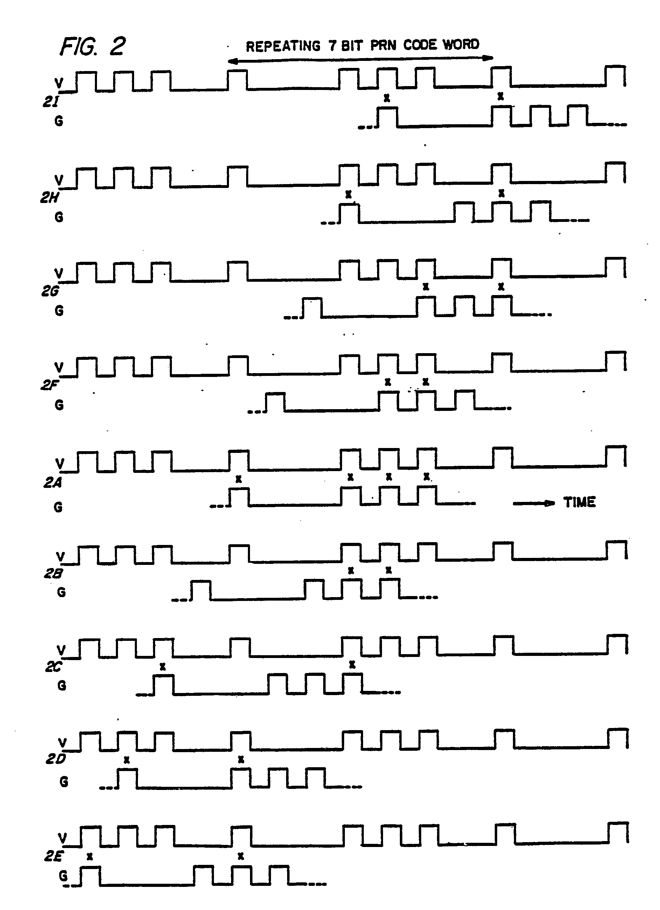

Figures 2A—2I illustrate the operation of the system for a simple case of a "7-bit" word, one with seven pulse positions. FIGURE 2a shows the gating word pulses "G", such as those provided by gate 26a, properly synchronized with the return video pulses "V". FIGURES 2B, 2C, 2D and 2E show the gating word successively 1, 2, 3 and 4 pulse positions too early, and FIGURES 2F, 2G, 2H and 2I show the gating word successively 1, 2, 3 and 4 pulse positions too late. Note that in FIGURE 2A four pulses per video word, those marked with x, coincide with gating pulses, while each of FIGURES 2B and 2I only two pulses per video word coincide with gating pulses. Thus, for even this short word, an integrator output corresponding to three or fewer coincident pulses is indicative that synchronization is not properly complete. For words with a greater number of bits, the output differences between correctly and incorrectly synchronized signals is even greater.

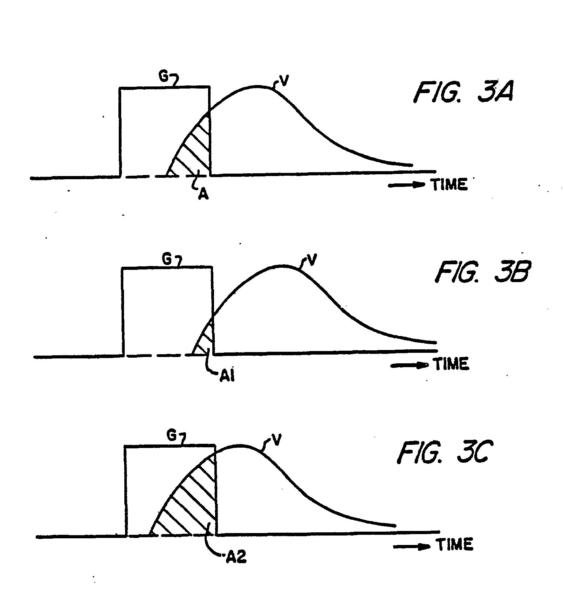

In FIGURES 2A—2I both the video pulses and the gating pulses are shown to be of square wave form — this is not generally the case in practice. The gate pulses can be substantially square, but the video pulses are unavoidably degrated. FIGURE 3 shows a wave form closer to what can be expected. Here curve G shows a gating pulse, and curve V shows the associated video pulse. The electronics are set up so that when the curves intersect to the specific area A, comparator 31 and corresponding decision signal give a zero output and counter 34 is in a HOLD state. If the area reduces to that indicated by $A_1$ in FIGURE 3b, counter 34 is accuated step-wise to count up to cause gate pulse G to occur later, while if the area increases to that indicated by $A_2$ in FIGURE 3c counter 34 is accuated step-wise to count down to cause pulse G to occur earlier. This result repeating in each case until area A is again achieved. Note that only when proper synchronization has been achieved does a maximum number of such instances take place.

The operation of the system is as follows. Under the control of clock 10 and code generator 12, a continual sequence of pulses with PRN coding is transmitted from antenna 17, and a like sequence of coded pulses is supplied to gate generator 26 after delay in line 24. Return pulses from antenna 20 cause the video pulses presented to gating circuit 27. When the system is in a search mode, the integrator output is low causing counter 34 to step through its range repeatedly for each clock input signal 75 in a predetermined direction. At some point in the sweep the gating pulses come into appropriate synchronism with the return pulses, to the extent that each gating pulse overlaps the video pulse. A signal of sufficient magnitude is strongly supplied through integrator 30 to change logic 33 from its search state to its track status. In the track mode, if the video pulses and the gate pulses overlap by an area A, the integrator signal to comparator 31 is equal to the reference 32, and the comparator gives no output, so that logic 33, counter 34 and indicator 36 remain in their present condition. Movement of the aircraft with respect to the ground, however, changes the delay of video signal V, to change the overlap area to some other value $A_1$ or $A_2$, and a signal to comparator 31 changes so that an "up" or "down" output is supplied to logic 33 and cause operation of counter 34 to adjust delay line 24 in a sense to change the area toward the area A.

From the above it will be evident that the invention comprises apparatus employing pseudo random pulse coding to enable increased pulse repetition frequency in a radar system without introduction of an abiguity into the signals. It will be evident that the arrangement has a high tolerance to interference, either intentional or incidental, since any interfering signal must comprise pulses having the particular pseudo random (PRN) coding in order to appreciably affect the apparatus. The synchronizing apparatus of the present invention has been illustrated by use of a radar altimeter. Numerous characteristics and advantages of the invention have been set forth in the foregoing description, together with details of the structure and function of the invention. However, the synchronizing apparatus of the present invention may be employed where it is necessary to synchronize two pulse trains separated in time by an unknown condition and synchronized with or derived from a common clock signal or pulse train. Nevertheless, changes may be made in detail especially in matters of shape, size, and arrangement of parts, within the principles of the invention, to the full extent indicated by the broad general meaning of the terms in which the appended claims are expressed. Specifically, a phase shifter or a shift register may be substituted for programmable delay line 24. Since the output of programmable delay line provides a second clock signal delay with respect to the first clock signal, from which both of these derive subsequent pulse trains for comparison and synchronization, there are many ways to provide such delay. A common shift register is one such technique for providing a programmable delay line. Another example is a discreet phase shifter also responsive to the output of counter 34 for monotonically changing the phase or delay of a second clock signal relative to the first clock signal.

## Claims

1. Pulse synchronizing apparatus, in particular for a radar distance measuring system comprising:

a) a clock generator (10) providing a continuous train of pulses having a predetermined repetition frequency,

b) first coding means (11, 12, 13) for deriving from said train a first digital signal having a pseudorandom binary coding,

c) second coding means (24, 23, 25) including delay means (24) for deriving from said train a second digital signal having the same coding but being delayed in relation to said first digital signal in response to a command signal;

d) means (16, 15, 17, 20, 21, 22) for transmitting said first digital signal and for receiving a train of video pulses having said binary coding and being delayed in relation to said first digital signal in accordance with a distance to be measured;

e) comparator means (31) responsive to said received train of pulses and to said second digital signal for providing decision signals indicative of at least (i) substantial synchronization between said second digital signal and said received pulse train and (ii) non-synchronization thereof;

f) control means (34) responsive to said decision signals for providing said command signal for said delay means (24) such that said second digital signal is selectively advanced and retarded by monotonic increments with respect to said first digital signal; characterized in that

g) said control means comprises an up/down counter (34) for providing said command signal, said command signal corresponding to the number held by the counter;

h) said counter has a first input (50) responsive to said decision signals for selecting the counting direction in accordance with the status of said decision signals;

i) said counter has a second input (75) for receiving said continuous train of pulses as provided by said clock generator (10); and

j) said counter has command signal output means (76) connected to control input means of said delay means (24) for selectively changing the delay of said second digital signal by monotonic increments.

2. An apparatus according to claim 1, characterized by

a) first divider means (11) connected with its input to an output of said clock generator (10) and having outputs connected to said first coding means (12, 13) and to said up/down counter (34);

b) second divider means (23) connected between said delay means (24) and said second coding means (25); with

c) each of the two divider means dividing its input pulse signal by the same factor (N).

3. Apparatus according to claim 1 or 2, characterized in that

a) said comparator (31) has a first input (32) connected to a reference voltage source and has a second input connected via an integrator (30) to output means (61, 63) of a gating circuit (27);

b) said gating circuit receives at its signal input said received train of video pulses; and

c) said gating circuit is actuated by said second digital signal to gate said train of video pulses, dependent on the polarity of said second digital signal, either to the positive or to the negative input of an adder (29) whose output is connected to the input of said integrator (30).

4. Apparatus according to claim 3, characterized in that

a) a gate generator (26) is connected to said second coding means (25) to derive from the pulses of said second digital signal a pair of distinguishable gating pulses (42, 43) in accordance with whether said pulses of said second digital signal have positive or zero values;

b) the gating circuit (27) is connected to said gate generator (26) and to said train of video pulses to provide at its first output (61) a signal corresponding to those video pulses being in synchronism with said second digital signal and to provide at its second output (63) a signal corresponding to those video pulses being not in synchronism with said second digital signal; and

c) the positive input of said adder (29) is connected to the first output (61) and the negative input of the adder is connected to the second output (63) of said gating circuit (27).

**Patentansprüche**

1. Impulssynchronisiereinrichtung, insbesondere für ein Radar-Abstandsmeßsystem, mit

a) einem Taktgenerator (10) zum Erzeugen einer kontinuierlichen Impulsfolge mit vorgegebener Wiederholungsfrequenz;

b) einer ersten Codiervorrichtung (11, 12, 13), um aus der Impulsfolge ein erstes Digitalsignal mit pseudostochastischer binärer Codierung abzuleiten;

c) einer zweiten Codiervorrichtung (24, 23, 25) einschließlich einer Verzögerungseinrichtung (24), um aus der genannten Impulsfolge ein zweites Digitalsignal mit gleicher Codierung abzuleiten, welches gegenüber dem ersten Digitalsignal in Abhängigkeit von einem Kommandosignal verzögert ist;

d) einer Vorrichtung (16, 15, 17, 20, 21, 22) zum Aussenden des ersten Digitalsignals und zum Empfangen einer Folge von Videoimpulsen, welche die genannte binäre Codierung aufweist und gegenüber dem ersten Digitalsignal in Abhängigkeit einer zu messenden Entfernung verzögert ist;

e) einer Vergleichseinrichtung (31), welche auf die empfangene Impulsfolge sowie das zweite Digitalsignal anspricht und Entscheidungssignale liefert, die wenigstens (i) eine praktische Synchronisierung zwischen dem zweiten Digitalsignal und der empfangen Impulsfolge oder (ii) deren Nichtsynchronisierung anzeigen;

f) einer auf die Entscheidungssignale ansprechenden und das Kommandosignal für die Verzögerungseinrichtung derart erzeugenden Steuereinrichtung (34), daß das zweite Digitalsignal selektiv gegenüber dem ersten Digitalsignal um monotone Schritte beschleunigt oder verzögert wird; dadurch gekennzeichnet, daß

g) die Steuereinrichtung einen Auf/Abwärtszähler (34) zur Erzeugung des Kommandosignals umfaßt, wobnei das Kommandosignal dem Zählstand des Zählers entspricht;

h) der Zähler einen auf die Entscheidungssignale ansprechenden ersten Eingang (50) aufweist, um in Abhängigkeit vom Zustand der Entscheidungssignale die Zählrichtung zu bestimmen;

i) der Zähler einen die kontinuierliche Impulsfolge des Taktgebers (10) empfangenden zweiten Eingang (75) aufweist; und

j) der Zähler eine an eine Steuereingangsanordnung der Verzögerungseinrichtung (24) angeschlossene Kommandosignalausgangsanordnung aufweist, um die Verzögerung des zweiten Digitalsignals um monotone Schritte zu ändern.

2. Einrichtung nach Anspruch 1, gekennzeichnet durch

a) einen mit seinem Eingang an einen Ausgang des Taktgenerators (10) angeschlossenen ersten Teiler (11), dessen Ausgänge an den ersten Codierer (12, 13) bzw. an den Auf/Abwärtszähler (34) angeschlossen sind;

b) einen zwischen die Verzögerungseinrichtung (24) und den zweiten Codierer (25) eingeschalteten zweiten Teiler (23); wobei

c) beide Teiler ihr Eingangsimpulssignal durch den gleichen Faktor (N) teilen.

3. Einrichtung nach Anspruch 1 oder 2, dadurch gekennzeichnet, daß

a) die Vergleichseinrichtung (31) einen an eine Bezugsspannungsquelle angeschlossen ersten Eingang (32) sowie einen über einen Integrator (30) an Ausgänge (61, 63) einer Gatterschaltung (27) angeschlossenen zweiten Eingang aufweist;

b) der Gatterschaltung als Eingangssignal die empfangene Videoimpulsfolge zugeleitet wird; und

c) die Gatterschaltung durch das zweite Digitalsignal in Abhängigkeit von dessen Polarität zur Durchschaltung der Videoimpulsfolge entweder zum positiven oder zum negativen Eingang eines Addierers (29) gesteuert wird, dessen Ausgang mit dem Eingang des Integrators (30) verbunden ist.

4. Einrichtung nach Anspruch 3, dadurch gekennzeichnet, daß

a) an den zweiten Codierer (25) ein Gatterimpulsgenerator (26) angeschlossen ist, der aus den Impulsen des zweiten Digitalsignals in Abhängigkeit davon, ob dessen Impulse positiv oder gleich Null sind, zwei unterschiedliche Gatterimpulse (42, 43) ableitet;

b) die Gatterschaltung (27) an der Gatterimpulsgenerator (26) und an die Videoimpulsfolge angeshlossen ist, um an ihrem ersten Ausgang (61) ein denjenigen Videoimpulsen entsprechendes Signal zu erzeugen, welche mit dem zweiten Digitalsignal synchronisiert sind, und um an ihrem zweiten Ausgang (63) ein denjenigen Videoimpulsen entsprechendes Signal zu erzeugen, die mit dem zweiten Digitalsignal nicht synchronisiert sind;

c) der positive Eingang des Addierers (29) an den ersten Ausgang (61) und der negative Eingang des Addierers and den zweiten Ausgang (63) der Gatterschaltung (27) angeschlossen ist.

**Revendications**

1. Dispositif de synchronisation d'impulsions, en particulier pour un système de mesure de distance pour radar comprenant:

a) un générateur d'horloge (10) délivrant un train continu d'impulsions ayant une fréquence de répetition prédéterminée;

b) des premiers moyens de codage (11, 12, 13) pour extraire dudit train un premier signal numérique ayant un codage binaire pseudo-aléatoire;

c) des seconds moyens de codage (24, 23, 25) comprenant des moyens de retard (24) pour extraire dudit train un second signal numérique ayant le même codage mais étant retardé relativement audit premier signal numérique en réponse à un signal de commande;

d) des moyens (16, 15, 17, 20, 21, 22) pour transmettre ledit premier signal numérique et pour recevoir un train d'impulsions vidéo ayant ledit codage binaire et étant retardées relativement audit premier signal numérique selon une distance à mesurer;

e) des moyens comparateurs (31) sensibles audit train reçu d'impulsions et audit second signal numérique pour délivrer des signaux de décision indicatifs d'au moins i) une synchronisation substantielle entre ledit second signal numérique et ledit train d'impulsions reçues et ii) une non-synchronisation de ceux-ci;

f) des moyens de commande (34) sensibles auxdits signaux de décision pour délivrer ledit signal de commande pour lesdits moyens de retard (24) de sorte que ledit second signal numérique est sélectivement avancé et retardé par des incréments monotoniques relativement audit premier signal numérique, caractérisé en ce que:

g) lesdits moyens de commande comprennent un compteur vers le haut/vers le bas (34) pour fournir ledit signal de commande, ledit signal de commande correspondant au nombre maintenu par le compteur;

h) ledit compteur a une première entrée (50) sensible auxdits signaux de décision pour choisir la direction de comptage selon l'état desdits signaux de décision;

i) ledit compteur a une seconde entrée (75) pour recevoir ledit train continu d'impulsions tel que délivré par le générateur d'horloge (10); et

j) ledit compteur a des moyens de sortie formant signal de commande (76) reliés aux moyens d'entrée de commande desdits moyens de retard (24) pour modifier sélectivement le retard dudit second signal numérique par des incréments monotoniques.

2. Dispositif selon la revendication 1, caractérisé par:

a) des premiers moyens diviseurs (11) reliés par leur entrée à une sortie du générateur d'horloge (10) et ayant des sorties reliées auxdits premiers moyens de codage (12, 13) et audit compteur vers le haut/vers le bas (34);

b) des seconds moyens diviseurs (23) reliés entre lesdits moyens de retard (24) et lesdits seconds moyens de codage (25); avec

c) chacun des deux moyens diviseurs divisant leur signal d'impulsions d'entrée par le même facteur (N).

3. Dispositif selon l'une des revendications 1 ou 2, caractérisé en ce que:

a) ledit comparateur (31) a une première entrée (32) reliée à une source de tension de référence et à une seconde entrée reliée par l'intermédiaire d'un intégrateur (30) à des moyens de sortie (61, 63) d'un circuit formant porte (27);

b) ledit circuit formant porte reçoit à son entrée de signal ledit train reçu d'impulsions vidéo; et

c) ledit circuit formant porte est actionné par ledit second signal numérique en vue d'appliquer ledit train d'impulsions vidéo, selon la polarité du second signal numérique soit à l'entrée positive ou à l'entrée négative d'un additionneur (29) dont la sortie est reliée à l'entrée dudit intégrateur (30).

4. Dispositif selon la revendication 3, caractérisé en ce que:

a) un générateur formant porte (26) est relié aux seconds moyens de codage (25) pour extraire des impulsions dudit second signal numérique une paire d'impulsions distinctes de porte (42, 43) selon que lesdites impulsions dudit second signal numérique ont des valeurs positives ou nulles;

b) le circuit formant porte (27) est relié audit générateur formant porte (26) et auxdites impulsions vidéo dudit train en vue de délivrer à san première sortie (61) un signal correspondant â ces impulsions vidéo qui sont en synchronisme avec ledit second signal numérique et en vue de délivrer à sa seconde sortie (63) un signal correspondant à ces impulsions vidéo qui ne sont pas en synchronisme avec ledit second signal numérique; et

c) l'entrée positive de cet additionneur (29) est reliée à la première sortie (61) et l'entrée négative de l'additionneur est reliée à la seconde sortie (63) dudit circuit formanat porte (27).

Fig. 1

EP 0 156 375 B1

FIG. 2

REPEATING 7 BIT PRN CODE WORD

FIG. 3A

FIG. 3B

FIG. 3C